# EUROPEAN PATENT SPECIFICATION

(11) **EP 1 726 985 B1**
(45) Date of publication and mention of the grant of the patent: **26.11.2008**
(21) Application number: 06113540.6
(22) Date of filing: 05.05.2006
(51) Int. Cl.: G02C 5/22

(54) **Elastic hinge for eyeglasses**
Elastisches Scharnier für Brillen
Charnière élastique pour lunettes

(30) Priority: 27.05.2005 IT PD20050158
(43) Date of publication of application: 29.11.2006
(73) Proprietor: Visottica Industrie S. P. A., 31058 Susegana TV (IT)
(72) Inventor: MONTALBAN, Rinaldo, 30100, VENEZIA (IT)
(74) Representative: Modiano, Micaela Nadia

(56) References cited:
- DE-A1- 2 126 898
- DE-U1- 9 002 858
- FR-A- 2 665 268
- GB-A- 1 557 407

## Description

The present invention relates to an elastic hinge for eyeglasses.

The invention is used mainly in the field of hinges of the type that can be electrowelded.

Currently known elastic hinges for eyeglasses are mostly constituted by an elongated metallic box-like body, which has a slot-like receptacle in which an elastic element, such as for example a helical spring, and a first hinge articulation element, associated with the elastic element, are inserted.

Such a device is described in DE 2126898, which discloses a spring hinge element for glasses for overbending the temple beyond the abutment position, the hinge element being inserted in a correspondingly formed recess at one end of a temple. The temple is provided with a corresponding recess accommodating such hinge element.

The elastic element is retained by a contrast element locked within the receptacle.

The first articulation element is arranged, with a guiding portion, so that it can slide within the receptacle and protrude from said receptacle through a front opening with its own hinge component.

Such first articulation element is pivoted with the hinge component to a complementary component of a second hinge articulation element, which in turn is rigidly coupled to the front of the frame of the eyeglasses.

In order to allow stable positions for closure and use, the second articulation element is of the type with a cam which interacts with the head of the box-like body.

As mentioned, the first articulation element slides within the slot-like receptacle of the box-like body.

Due to the dimensions of the temple and of the front with respect to the dimensions of the hinge, the first articulation element is subject to torsions during use of the eyeglasses (particularly during the opening and closure of the temple onto the front), which can lead to breakage or deformation of the hinge.

These torsions are particularly large in hinges associated with wraparound eyeglasses or the like, in which the temples are much wider than the box-like body of the hinge (the term "width" being used to reference the dimension along the direction of the hinge axis).

The aim of the present invention is to provide an elastic hinge for eyeglasses which allows to prevent the torsional play of currently known elastic hinges of comparable size.

Within this aim, an object of the present invention is to provide an elastic hinge for eyeglasses which can be assembled and fixed easily to eyeglasses.

Another object of the present invention is to provide an elastic hinge for eyeglasses which is well-suited for various types of eyeglasses, including eyeglasses with particularly "wide" temples.

Another object of the present invention is to provide an elastic hinge for eyeglasses which can assume particularly stable active or inactive positions.

Another object of the present invention is to provide an elastic hinge for eyeglasses which can be manufactured cheaply.

Another object of the present invention is to provide an elastic hinge for eyeglasses which can be manufactured with known systems and technologies.

This aim and these and other objects, which will become better apparent hereinafter, are achieved by an elastic hinge for eyeglasses, of the type which comprises a box-like body, which is intended to be fixed by means of one of its faces to the temple of a pair of eyeglasses and forms a slot-like receptacle for accommodating and guiding a first articulation element, which can be inserted in said slot through an opening formed in the face of the box-like body to be fixed to the temple, said first articulation element being constituted by an articulation head, which protrudes from one end of said box-like body, and by an internal part, which is contained in said box-like body and is associated with an elastic element for contrasting the exit of said articulation head from said end, a second articulation element being pivoted to said first articulation element, characterized in that said internal part of said first articulation element is constituted by a thin plate, which is connected to said head by a stem portion, said plate being wider than said stem portion, said plate, when the box-like body is fixed to the temple, being in contact by means of a flat region with said temple, said elastic element being constituted by a flat spring, in which the direction of its elastic action is parallel to its planar extension, said spring resting flat against said plate and being comprised between said plate and the bottom of said slot, said flat spring being further comprised, along the direction of its elastic action, between two opposite shoulders formed on said internal part of the first articulation element and between two opposite abutments formed on the bottom of said slot.

Further characteristics and advantages of the invention will become better apparent from the following detailed description of a preferred but not exclusive embodiment thereof, illustrated by way of non-limiting example in the accompanying drawings, wherein:
Figure 1 is a partially sectional side view of an elastic hinge according to the invention, arranged in the configuration in which the temple is open on the front;
Figure 2 is a partially sectional plan view of the elastic hinge of Figure 1;
Figure 3 is a partially sectional side view of the temple of the hinge portion of Figure 1 related to the temple of the eyeglasses;
Figure 4 is a partially sectional side view of the elastic hinge of Figure 1, arranged in the configuration in which the temple is closed on the front;
Figure 5 is a perspective view of the first articulation element of the hinge of Figure 1, with a flat spring associated therewith;
Figure 6 is a perspective view of the box-like body of the hinge according to the invention, taken from the side to be fixed to the temple, with the corresponding male articulation element inserted therein, said hinge portion being divided into two parts, the part a) designating the box-like body before a deformation for locking the corresponding male articulation element and the part b) designating the box-like body after said deformation;
Figure 7 is a sectional front view of a portion of a hinge according to the invention.

With reference to the figures, a hinge according to the invention is generally designated by the reference numeral 10.

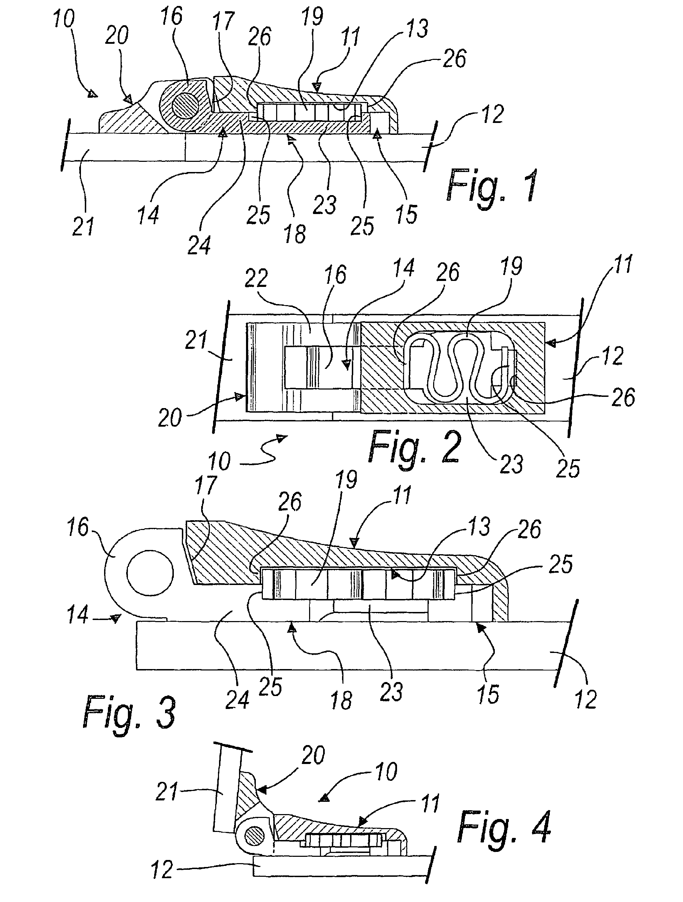

The hinge 10 comprises a box-like body 11, to be fixed by means of one of its faces to a temple of a pair of eyeglasses, which is generally designated by the reference numeral 12 (in Figures 1 to 4, the hinge is shown welded at the tip of the temple 12).

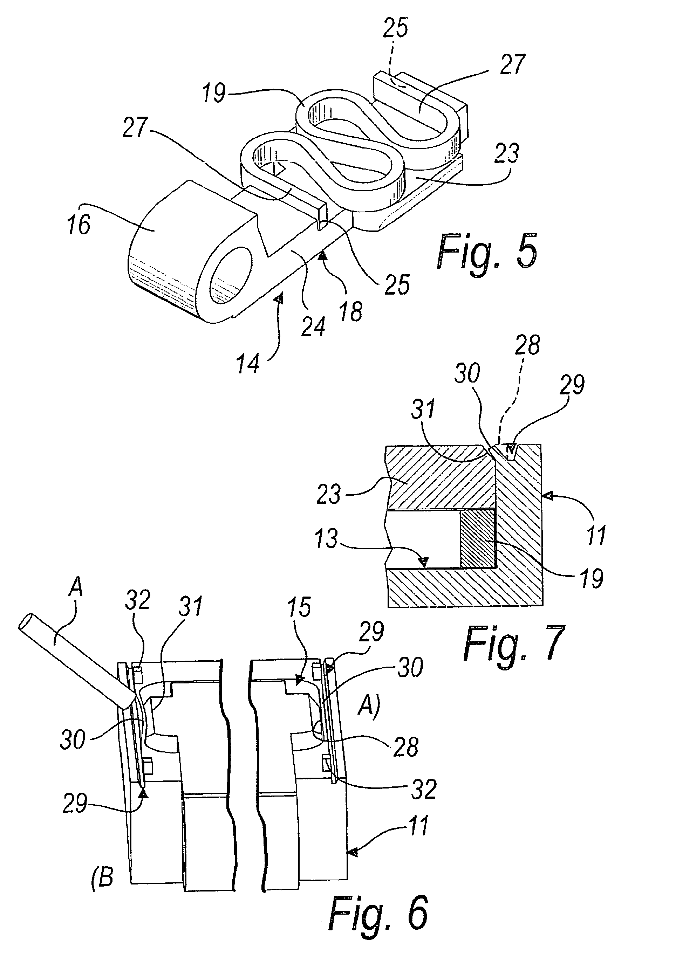

The box-like body 11 forms internally a slot-like receptacle 13 for accommodating and guiding a first articulation element 14 of the hinge 10 (clearly shown in Figure 5 outside the box-like body).

An opening 15 for accessing the slot 13 is provided on the face of the box-like body 11 to be fixed to the temple and is useful for insertion, during assembly, of the first articulation element 14 in the slot 13.

The first articulation element 14 is constituted by an articulation head 16, which protrudes from one end 17 of the box-like body 11, and by an internal part 18, which is contained in the box-like body 11 and is associated with an elastic element, such as a flat spring 19 whose direction of elastic action is parallel to its planar extension, for contrasting the exit of the articulation head 16 from the end 17.

The first articulation element 14 is pivoted to a second articulation element 20, which is fixed to a front of a pair of eyeglasses 21.

In particular, in this embodiment, the first articulation element 14 has an articulation head 16 of the male type, while the second articulation element 20 has a fork-like articulation head 22 of the female type, which is cam-shaped in order to determine, in cooperation with the flat spring 19, two stable positions, respectively a position in which the temple is closed onto the front and a position in which the temple is open on the front, as shown in Figures 1 and 4.

The flat spring 19 is constituted by a steel lug, which is coiled so as to lie substantially along a flat direction, with the bending axes substantially perpendicular to said planar direction.

In particular, the steel used for the spring 19 is a steel with permanent magnetism characteristics; a steel of the martensitic type is preferably chosen.

The internal part 18 of the first articulation element is constituted by a thin plate 23, which is connected to the head 16 by a portion of a stem 24.

The flat spring 19 rests by means of a face on the plate 23 and is comprised between said plate and the bottom of the slot 13.

The width of the flat spring 19 is substantially equal to the width of the plate 23 (where the term "width" designates the dimension along the direction of the rotation axis of the hinge).

Advantageously, the plate 23 is wider than the portion of stem 24.

The plate slides against the surface of the temple 12 to which the box-like body 11 is fixed with the first articulation element 14 inserted therein.

The width of the stem portion 24 is substantially equal, in this embodiment, to the width of the head 16.

The slot 13 is shaped so as to form respective guiding portions for the stem portion 24 and for the plate 23.

The flat spring 19 is further comprised, in the direction of the elastic action, between two opposite shoulders 25, provided on the internal part 18 of the first articulation element 14, and between two opposite abutments 26, provided on the bottom of the slot 13.

In particular, the distance between the two abutments 26 is greater than the distance between the two shoulders 25, in order to facilitate the assembly of the hinge, as explained hereinafter.

Assembly of the spring occurs in the following manner: the flat spring 19 is compressed and arranged between the two shoulders 25, in contact with the plate 23, and in this manner the spring 19 is preloaded with its end portions 27 in contact with the respective shoulders 25.

By way of this preloading, the spring 19 is fixed to the first articulation element 14 sufficiently to allow its insertion together with it in the slot 13 through the opening 15.

In particular, the insertion of the assembly constituted by the first articulation element 14 and the flat spring 19 in the slot 13 occurs in such a way that the end portions 27 of the spring 19 are comprised between the opposite abutments 26 of the slot 13.

In order to prevent the exit of the assembly constituted by the first articulation element 14 and the flat spring 19 from the slot 13, along the face of the box-like body 11 to be fixed to the temple 12, parallel to the direction of translational motion of the first articulation element 14 and on opposite sides with respect to the opening 15, proximate to the lateral edge 28 of the opening 15, there are grooves 29 which form, monolithically with the lateral edge 28, thin lugs 30.

The thin lugs 30 are folded toward the inside of the box-like body 11 (which is made of a plastically deformable metallic material), so as to form an undercut for preventing the exit of the first articulation element 14.

Conveniently, in the plate 23, which has substantially the same width as the slot 13 (for the parts in which the former slides within the latter), the lateral edges 31 related to contact with the temple 12 are bevel; in this manner, the thin lugs 30 can be folded advantageously without protruding with respect to the face of the box-like body 11 to be fixed to the temple 12.

Figure 6 illustrates the box-like body 11 divided into two parts: one part a) shows the box-like body 11 with the first articulation element 14 before the deformation of the lugs 30, while the part b) shows the box-like body 11 with the first articulation element 14 after the deformation of the lugs 30 by a punch, designated by the reference letter A.

Likewise, Figure 7 illustrates a portion of a box-like body 11 with the first articulation element 14 shown in cross-section, illustrating the deformation of a lug 30 (said lug before deformation is shown in broken lines).

Four metallic studs 32, suitable for the electrowelding of the box-like body 11 to the temple 12, are provided on the same face of the box-like body 11 to be fixed to the temple 12.

Once the box-like body 11, with the first articulation element 14 and the flat spring 19 inside it, has been welded to the temple 12, the second articulation element 20 (previously fixed to the front) is pivoted to the articulation head 16.

The operation of the hinge is simple.

The flat spring 19 is preloaded between the shoulders 25 of the internal part 18 of the first articulation element 14.

When a relative rotation of the first articulation element 14 with respect to the second articulation element 20 occurs, the former moves from inside the slot 13 to outside it, and vice versa.

Any movement of the first articulation element 14 from the assembly position in the slot 13 toward the outside of the slot causes the flat spring 19 to be compressed further between the shoulder 25 that lies furthest from the articulation head 16 and the abutment 26 that lies closest to the end 17 from which the first articulation element 14 protrudes.

In practice it has been found that the invention thus described solves the problems noted in known types of elastic hinge for eyeglasses; in particular, the present invention provides an elastic hinge for eyeglasses which solves the problems linked to the torsion of said hinge during its operation.

This has been achieved by providing, on the hinge articulation element that can move inside the box-like body, a plate which forms a very large sliding portion with respect to known hinges, which reduces considerably the possibilities of torsion of said articulation element.

Advantageously, in order to obtain a hinge whose dimensions are equal to those of known hinges (at least along the direction of its height), a flat spring has been added to the thin plate which allows to avoid increasing the height of the box-like body.

The particular shape of the first articulation element 14 further allows to associate in a sufficiently stable manner the flat spring, by preloading it, with said first articulation element, thus facilitating the insertion thereof in the box-like body.

The use of the deformable grooves at the end of the lateral edge of the opening 15 of the box-like body allows to prevent easily the escape of the first articulation element from said box-like body during assembly and welding to the temple.

The use of a martensitic steel with permanent magnetism characteristics allows to obtain a flat spring which has the necessary rigidity and at the same time allows to facilitate assembly, allowing to use optional magnetic devices for assembly (for example particular grip handling devices or traps for correct orientation in assembly stations).

It is further evident that the hinge according to the invention is extremely simplified with respect to known hinges, thus leading to easier assembly and to an overall reduction of production costs.

The invention thus conceived is susceptible of numerous modifications and variations, all of which are within the scope of the appended claims; all the details may further be replaced with other technically equivalent elements.

In practice, the materials employed, so long as they are compatible with the specific use, as well as the dimensions, may be any according to requirements and to the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An elastic hinge for eyeglasses, of the type which comprises a box-like body (11), which is intended to be fixed by means of one of its faces to the temple (12) of a pair of eyeglasses and forms a slot-like receptacle (13) for accommodating and guiding a first articulation element (14), which can be inserted in said slot (13) through an opening (15) formed in the face of the box-like body (11) to be fixed to the temple (12), said first articulation element (14) being constituted by an articulation head (16), which protrudes from one end (17) of said box-like body (11), and by an internal part (18), which is contained in said box-like body (11) and is associated with an elastic element for contrasting the exit of said articulation head (16) from said end (17), said elastic element is constituted by a flat spring (19), in which the direction of its elastic action is parallel to its planar extension, a second articulation element (20) to be fixed to the front (21) of the eyeglasses being pivoted to said first articulation element (14), said internal part (18) of said first articulation element (14) is constituted by a thin plate (23), which is connected to said articulation head (16) by a stem portion (24), said plate (23) being wider than said stem portion (24), said plate (23), when the box-like body (11) is fixed to the temple (12), being in contact by means of a flat region with said temple (12) **characterized in that**, said spring resting flat against said plate (23) and being comprised between said plate (23) and the bottom of said slot (13), said flat spring (19) being further comprised, along the direction of its elastic action, between two opposite shoulders (25) formed on said internal part (18) of the first articulation element (14) and between two opposite abutments (26) formed on the bottom of said slot (13).

2. The hinge according to claim 1, **characterized in that** the distance between said two abutments (26) is greater than the distance between said two shoulders (25), said flat spring (19), during the assembly of said first articulation element (14) to said box-like body (11), being preloaded with its own end portions (27) in contact with the respective said shoulders (25).

3. The hinge according to claim 1 or 2, **characterized in that** grooves (29) are provided on the face of said box-like body (11) to be fixed to the temple (12), parallel to the direction of translational motion of said first articulation element (14) and on opposite sides with respect to said opening (15), proximate to the lateral edge (28) of said opening (15), and form, monolithically with said lateral edge (28), plastically deformable thin lugs (30), which are folded toward the inside of said box-like body (11) so as to form an undercut for preventing the exit of said first articulation element (14) from said opening (15).

4. The hinge according to claim 3, **characterized in that** in said plate (23) the lateral edges (31) related to contact with the temple (12) are beveled in order to allow the folding of said thin lugs (30).

5. The hinge according to claim 4, **characterized in that** metallic studs (32) are provided on the face of said box-like body (11) to be fixed to the temple (12) and are useful for the electrowelding of said box-like body (11) to the temple (12).

6. The hinge according to one or more of the preceding claims, **characterized in that** said flat spring (19) is constituted by a steel lug, which is folded so as to lie substantially along a planar direction, with the folding axes substantially at right angles to said planar direction.

7. The hinge according to claim 6, **characterized in that** said flat spring (19) is made of a martensitic steel with permanent magnetism characteristics.

8. The hinge according to one or more of the preceding claims, **characterized in that** said slot (13) is shaped so as to form respective guiding portions for said stem portion (24) and for said plate (23), the width of said flat spring (19) being substantially equal to the width of said plate (23), the term "width" designating the dimension along the direction of the rotation axis of the hinge.

9. The hinge according to claim 8, **characterized in that** the width of said stem portion (24) is substantially equal to the width of said articulation head (16).

## Patentansprüche

1. Ein elastisches Scharnier für Brillen, von der Art, die einen Kasten-ähnlichen Körper (11) umfasst, der mit einer seiner Flächen an dem Bügel (12) einer Brille befestigt werden soll und einen schlitzartigen Behälter (13) zum Aufnehmen und Führen eines ersten Gelenkverbindungs-Elements (14) bildet, das durch eine Öffnung (15), die in der an dem Bügel (12) zu befestigenden Fläche des Kasten-ähnlichen Körpers (11) geformt ist, in den Schlitz (13) eingesetzt werden kann, wobei das erste Gelenkverbindungs-Element (14) aus einem Gelenkverbindungs-Kopf (16) besteht, der aus einem Ende (17) des Kasten-ähnlichen Körpers (11) herausragt, und aus einem inneren Teil (18), der in dem Kasten-ähnlichen Körper (11) enthalten ist und mit einem elastischen Element verbunden ist, um dem Austritt des Gelenkverbindungs-Kopfs (16) aus dem Ende (17) entgegenzuwirken, wobei das elastische Element aus einer Blattfeder (19) besteht, in der die Richtung ihrer elastischen Wirkung parallel zu ihrer ebenen Ausdehnung ist, wobei ein zweites Gelenkverbindungs-Element (20), das an der Vorderseite (21) der Brille zu befestigen ist, schwenkbar am ersten Gelenkverbindungs-Element (14) angeordnet ist, wobei der innere Teil (18) des ersten Gelenkverbindungs-Elements (14) aus einer dünnen Platte (23) besteht, welche durch einen Stammabschnitt (24) mit dem Gelenkverbindungs-Kopf (16) verbunden ist, wobei die Platte (23) breiter ist als der Stammabschnitt (24), wobei die Platte (23), wenn der Kasten-ähnliche Körper (11) an dem Bügel (12) befestigt ist, durch einen flachen Bereich in Kontakt mit dem Bügel (12) ist, **dadurch gekennzeichnet, dass** die Blattfeder flach auf der Platte (23) aufliegt und zwischen der Platte (23) und dem Boden des Schlitzes (13) enthalten ist, wobei die Blattfeder (19) weiter entlang der Richtung ihrer elastischen Wirkung zwischen zwei gegenüberliegenden Schultern (25) enthalten ist, die an dem inneren Teil (18) des ersten Gelenkverbindungs-Elements (14) geformt sind, und zwischen zwei gegenüberliegenden Anschlägen (26), die am Boden des Schlitzes (13) geformt sind.

2. Das Scharnier gemäß Anspruch 1, **dadurch gekennzeichnet, dass** der Abstand zwischen den zwei Anschlägen (26) größer ist als der Abstand zwischen den zwei Schultern (25), wobei die Blattfeder (19) während der Montage des ersten Gelenkverbindungs-Elements (14) an dem Kasten-ähnlichen Körper (11) mit ihren eigenen Endabschnitten (27) in Kontakt mit den entsprechenden Schultern (25) vorgespannt wird.

3. Das Scharnier gemäß Anspruch 1 oder 2, **dadurch gekennzeichnet, dass** Rillen (29) an der Fläche des Kasten-ähnlichen Körpers (11), die an dem Bügel (12) zu befestigen ist, bereitgestellt sind, und zwar parallel zur Richtung der translatorischen Bewegung des ersten Gelenkverbindungs-Elements (14) und auf gegenüberliegenden Seiten in Bezug zur Öffnung (15), nahe der seitlichen Kante (28) der Öffnung (15), und monolithisch mit der seitlichen Kante (28) plastisch verformbare dünne Ansätze (30) bilden, die zur Innenseite des Kasten-ähnlichen Körpers (11) hin gefalten sind, um einen Hinterschnitt zu bilden, um den Austritt des ersten Gelenkverbindungs-Elements (14) aus der Öffnung (15) zu verhindern.

4. Das Scharnier gemäß Anspruch 3, **dadurch gekennzeichnet, dass** in der Platte (23) die seitlichen Kanten (31) im Zusammenhang mit dem Kontakt mit dem Bügel (12) abgeschrägt sind, um das Knicken der dünnen Ansätze (30) zu ermöglichen.

5. Das Scharnier gemäß Anspruch 4, **dadurch gekennzeichnet, dass** Metallstifte (32) an der Fläche des Kasten-ähnlichen Körpers (11), die an dem Bügel (12) zu befestigen ist, bereitgestellt sind und zum elektrischen verschweißen des Kasten-ähnlichen Körpers (11) mit dem Bügel (12) nützlich sind.

6. Das Scharnier gemäß einem oder mehreren der obigen Ansprüche, **dadurch gekennzeichnet, dass** die Blattfeder (19) aus einem Stahlansatz besteht, der so gefaltet ist, dass er im Wesentlichen entlang einer ebenen Richtung liegt, mit den Faltachsen im Wesentlichen in rechten Winkeln zu der ebenen Richtung.

7. Das Scharnier gemäß Anspruch 6, **dadurch gekennzeichnet, dass** die Blattfeder (19) aus einem Martensit-Stahl mit Dauermagneteigenschaften besteht.

8. Das Scharnier gemäß einem oder mehreren der obigen Ansprüche, **dadurch gekennzeichnet, dass** der Schlitz (13) so geformt ist, dass er entsprechende Führungsabschnitte für den Stammabschnitt (24) und für die Platte (23) bildet, wobei die Breite der Blattfeder (19) im Wesentlichen gleich der Breite der Platte (23) ist, wobei der Begriff "Breite" das Maß entlang der Richtung der Drehachse des Scharniers bezeichnet.

9. Das Scharnier gemäß Anspruch 8, **dadurch gekennzeichnet, dass** die Breite des Stammabschnitts (24) im Wesentlichen gleich der Breite des Gelenkverbindungs-Kopfs (16) ist.

## Revendications

1. Charnière élastique pour lunettes, du type qui comprend un corps en forme de boite (11), qui est conçu pour être fixé à l'aide de l'une de ses faces à la branche (12) d'une paire de lunettes et qui forme un réceptacle en forme de fente (13) pour recevoir et guider un premier élément d'articulation (14), qui peut être inséré dans ladite fente (13) par l'intermédiaire d'une ouverture (15) formée dans la face du corps en forme de boîte (11) devant être fixé à la branche (12), ledit premier élément d'articulation (14) étant constitué par une tête d'articulation (16), qui fait saillie à partir d'une extrémité (17) dudit corps en forme de boite (11), et par une partie interne (18), qui est contenue dans ledit corps en forme de boite (11) et qui est associée à un élément élastique pour contraster la sortie de ladite tête d'articulation (16) vis-à-vis de ladite extrémité (17), ledit élément élastique étant constitué par un ressort plat (19), la direction de son action élastique étant parallèle à son étendue dans un plan, un deuxième élément d'articulation (20) devant être fixé à l'avant (21) des lunettes, pivotant par rapport audit premier élément d'articulation (14), ladite partie interne (18) dudit premier élément d'articulation (14) étant constituée par une plaque mince (23), qui est reliée à ladite tête d'articulation (16) par une partie de tige (24), ladite plaque (23) étant plus large que ladite partie de tige (24), ladite plaque (23), lorsque le corps en forme de boîte (11) est fixé à la branche (12), étant en contact par l'intermédiaire d'une région plate avec ladite branche (12), **caractérisée** entre ce que ledit ressort repose à plat contre ladite plaque (23) et est inclus entre ladite plaque (23) et le fond de ladite fente (13), ledit ressort plat (19) étant de plus inclus, le long de la direction de son action élastique, entre deux épaulements opposés (25) formés sur ladite partie interne (18) du premier élément d'articulation (14) et entre deux butées opposées (26) formées sur le fond de ladite fente (13).

2. Charnière selon la revendication 1, **caractérisée en ce que** la distance entre lesdites deux butées (26) est supérieure à la distance entre lesdits deux épaulements (25), ledit ressort plat (19), durant l'assemblage dudit premier élément d'articulation (14) avec ledit corps en forme de boîte (11), étant préchargé avec ses propres parties d'extrémité (27) en contact avec lesdits épaulements respectifs (25).

3. Charnière selon la revendication 1 ou 2, **caractérisée en ce que** des rainures (29) sont réalisées sur la face dudit corps en forme de boite (11) devant être fixé à la branche (12), parallèles à la direction de mouvement de translation dudit premier élément d'articulation (14) et sur des côtés opposés vis-à-vis de ladite ouverture (15), à proximité du bord latéral (28) de ladite ouverture (15), et forment, de façon monolithique avec ledit bord latéral (28), de minces pattes déformables plastiquement (30), qui sont pliés vers l'intérieur dudit corps en forme de boite (11) de façon à former une entaille pour empêcher la sortie dudit premier élément d'articulation (14) hors de ladite ouverture (15).

4. Charnière selon la revendication 3, **caractérisée en ce que,** dans ladite plaque (23), les bords latéraux (31) associés pour venir en contact avec la branche (12) sont chanfreinés pour permettre le pliage desdites pattes minces (30).

5. Charnière selon la revendication 4, **caractérisée en ce que** des goujons métalliques (32) sont disposés sur la face dudit corps en forme de boîte (11) devant être fixé à la branche (12) et sont utiles pour le soudage électrique dudit corps en forme de boîte (11) à la branche (12).

6. Charnière selon l'une ou plusieurs des revendications précédentes, **caractérisée en ce que** ledit ressort plat (19) est constitué par une patte en acier, qui est pliée de façon à se trouver sensiblement le long d'une direction plane, avec les axes de pliage sensiblement à angle droit par rapport à ladite direction plane.

7. Charnière selon la revendication 6, **caractérisée en ce que** ledit ressort plat (19) est réalisé en acier martensitique avec des caractéristiques de magnétisme permanent.

8. Charnière selon l'une ou plusieurs des revendications précédentes, **caractérisée en ce que** ladite fente (13) est conformée de façon à former des parties de guidage respectives pour ladite partie de tige (24) et pour ladite plaque (23), la largeur dudit ressort plat (19) étant sensiblement égale à la largeur de ladite plaque (23), le terme "largeur" désignant la dimension le long de la direction de l'axe de rotation de la charnière.

9. Charnière selon la revendication 8, **caractérisée en ce que** la largeur de ladite partie de tige (24) est sensiblement égale à la largeur de ladite tête d'articulation (16).
